# EUROPEAN PATENT APPLICATION

(11) **EP 0 577 910 A1**
(43) Date of publication of application: **12.01.1994**
(21) Application number: 92830369.2
(22) Date of filing: 10.07.1992
(51) Int. Cl.: B62D 1/26, B61B 13/00

(54) **A vehicle system with automatic driving for the public transport on tyres, with electric traction and with aerial net**

(71) Applicant: Belli, Gioacchino, I-00191 Roma (IT)
(72) Inventor: Belli, Gioacchino, I-00191 Roma (IT)
(74) Representative: Mascioli, Alessandro, Prof.Dr.

(57) **Abstract**

The system according to the present invention comprises devices for the automatic driving for performing the steering operation and for following a predetermined parcours, an electric energy feeding net consisting of one or two conductors and a plurality of stations transmitting electromagnetic waves on board of the vehicles as well as on land, and exchanging information signals and manoeuvre comands.

## Description

The present invention concerns a vehicle system for the public transport, comprising means for the automatic driving, means for the electric traction with aerial net and wheels provided with tyres.

As an alternative to all other known public vehicle systems, like undergrounds, superelevation railways and town trains, the most recent urban transport technology seems to prefere the trams in seats protected by railings or small bushes, consisting of tram lines whose seat is prohibited to other vehicles and who are served by traffic lights on their own.

Such means has obtained great success because, together with a considerable commercial speed, it has the advantage of lacking exhaust gases and being not too expensive.

But the tram shows the inconvenience of the noise (the typical one of the metal wheel on the railway) and has the great disadvantage of the long and expensive works requested for preparing the seats and for placing the railways.

Furthermore, in consideration of the fact that usually said works are performed in areas where the traffic is particularly jerky, the same are of great disadvantage and economical damage for many people.

Nor should the negative consideration of the rigidity of the tram-system be forgotten, deriving from the economical burden and from the long time periods requested to change - whenever necessary - the original track.

The trolleybuses, even if having wheels provided with tyres and therefore lacking the problems deriving from the railways, are not indicated for replacing the trams for different reasons, but mainly because they need two aerial ducts for the energy feeding, because they have means for taking the current that are oftenly subject to accidental loosening from which derives an evident little assurance of the means.

It is the aim of the present invention to obtain a vehicle system for the public transport that may use the protected seats as well as the completely free ones, eliminating above mentioned disadvantages that are typical for trams.

For obtaining the aim set forth, the vehicle system for public transport according to the present invention comprises the following original new solutions:
- electric traction characterized in the absence of polluting emissions or of noises produced by the engine and by the reduced exercise cost;
- wheels provided with tyres that produce little noise as they do not transmit vibrations and request small braking spaces in emergency conditions;
- street seat integrated with accessory elements, consisting of means for the realization of the automatic driving;
- means for automatic driving, consisting of a tracing inserted in the street seat or placed near the aerial feeding net, and in sensor means provided on the vehicle;
- a system of current taps - aerial feeding net of a reliable kind, as the auomatic driving facilitates the solution of the relating problems due to the constance of the vehicles' position with respect to the drivers of the aerial feeding line so as to eliminate many of the actual causes of accidental disengagement of the current taps; the remaining possibilities of inconveniences of the system actually used on the trolley-buses are eliminated with original solutions;
- a system for feeding electric energy consisting of an aerial net in which each line may consist of two conductors or of one single conductor; in the latter case the metal element forming the reference tracing of the automatic driving, inserted in the gangway, has also the function of electric connection to earth;
- a double electric energy feeding system. In this case, the already described aerial net is extended on most part of the parcours and is interrupted in those areas in which such interruption may be suggested by ambiental (aesthetical or technical) considerations. In those areas in which there is no aerial net provided, the vehicles will be fed by accumulator batteries;
- an electronic control and manoeuvre system, mainly consisting of devices for changing signals between the moving vehicle and stations being appropriately provided in determined places, of the kind with electromagnetic waves, operated by means of radio-controls or alternate current impulses transmitted by the vehicle or received by the same through the same means taking or feeding electric current.

The present invention will be described more in detail hereinbelow relating to the enclosed drawings in which some preferred embodiments are shown.

Figure 1 shows a lateral view as well as section A-B of a sensor for the automatic driving, consisting of a small wheel that comes foreward in a small metal shape inserted in the street seat.

Figure 2 shows a lateral view and a cross section of a variant of the automatic driving device.

Figure 3 shows an exchange for a variant of the automatic driving.

Figure 4 shows a variant of the exchange of figure 3.

Figure 5 shows a scheme in lateral and top view of an exchange for an aerial conductor in correspondence of an exchange of the automatic driving of the vehicle.

Figure 6 shows an exemplifying scheme of the device that is able to allow the overcoming of the crossings if two flanked trolleys are used, similar to those actuall in use.

Figure 7 shows a scheme of the disposition of two trolleys similar to the actual ones having the function of taking electric energy, and a third trolley (the central one) having the function of supporting the sensor or transducing means to which the automatic driving is entrusted.

For what concerns the application of the system according to the present invention to the usual street seats, a series of adaptation works will have to be quickly performed for mounting the devices for realizing above described features.

Above mentioned automatic guide may be realized, according to the present invention, with different systems, all consisting of a tracing on the street seat or placed near the aerial energy feeding net, and of sensor means mounted onto the vehicle.

By means of servomechanisms the sensors act onto the wheels for making fall together the parcours with the tracing; the tracing may be prepared with material elements or by means of electromagnetic waves.

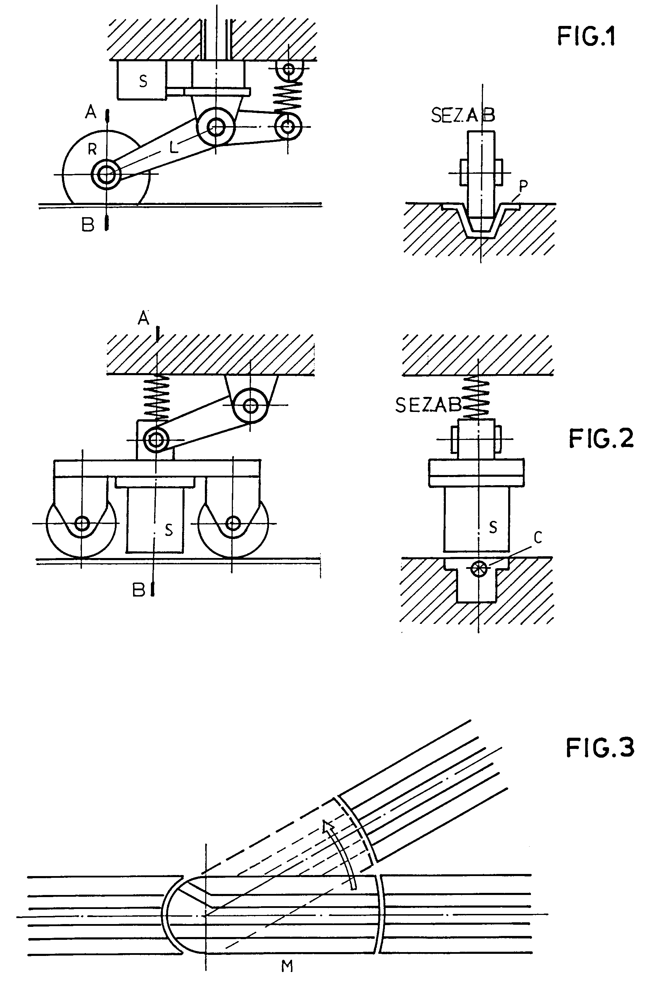

In the exemplifying variant shown in figure 1, the driving is entrusted to a metal shape inserted in the street seat in which the sensor, consising of a small wheel R povided at the end of a lever L that connects the same to the vehicle, rolls.

The control means of the power steering S is transmitting the signals for maintaining the axis of the lever parallel or coincident with the one of the vehicle.

The dimensions of the device shown in the figure are reduced as the functions thereof, as already mentioned, are limited to the transmission of the signals that will have to be amplified and then transformed into controls to the steering.

An appropriately designed ploughshare, or a different device not shown, will assure the cleaning of the driving and will cause the stillstanding of the vehicle in presence of bodies not removed by the ploughshare.

The device according to the present invention may be realized in a plurality of variants that are however all to reassume in one and the same system that may be defined 'with automatic driving'. Instead, figure 2 shows a different solution, in which from a small cable C inserted in the street seat, signals are emitted consisting of electromagnetic waves, that are received by a sensor S that is able to note the shifting of its own axis from the one of C.

The sensor orders the appropriate modifications for its own position through the power steering.

The small cable C follows the whole parcours, but it may be separated in parts of appropriate length, electrically devided; each part of the small cable will be operated and further disengaged by the advancing of the single vehicles.

In a possible variant, the invention provides a driving system consisting of a differential transformer mounted on board of the vehicle, fed at an appropriate frequency and placed near a metal guide fixed to the gangway; in that case, the outlet signal is nul when the transformer is in axis with the track, and has a positive or negative outlet for each shifting to the right or to the left.

In further variants also optical systems may be used, in which one (not necessarily continuos) tracing provided in the street seat and appropriately lighted (preferably with invisible light) may be read by photodiods or photoresistors.

Obviously, all above mentioned driving systems - mechanical as well as electronical - may be provided with appropriate exchange devices for the preparation of the chosen parcours in the presence of a possible alternative and one of which, shown in figure 3, consists in a movable element M that, once inserted in the intersection of two alternative parcours, may assume one of the two positions.

The control of the exchange will take place by means of one of the systems described hereinbelow.

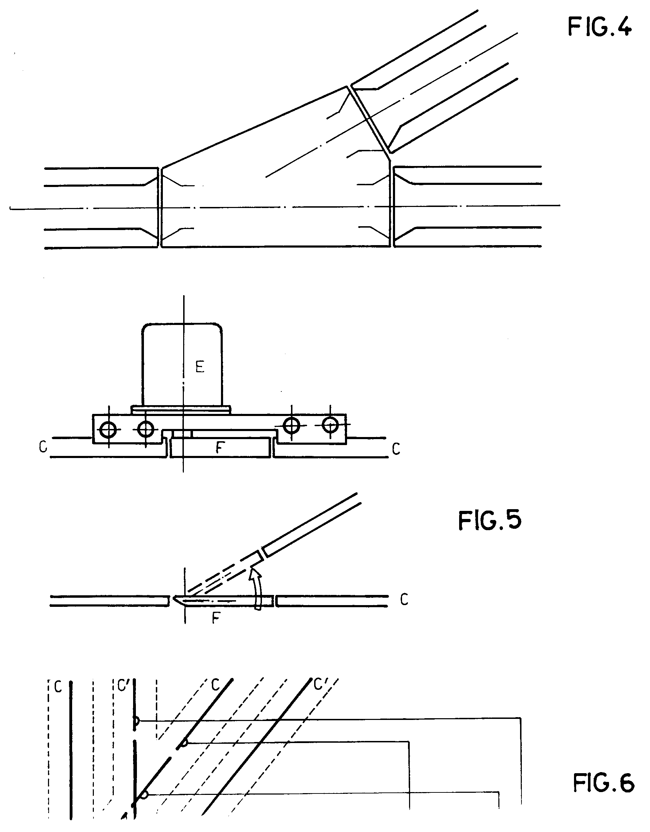

Relating to the details shown in figure 4, the small driving wheel is forced to rise and the exchange system, appropriately prepared, allows the vehicle, according to the space being examined, to proceed in the same sense, or it changes the parcours thereof.

The variant of the exchange according to figure 3, shown in figure 4, allows to eliminate the movable means installed in the gangway. The drawing shows the shape of the metal guide assumed in this case at the intersection of the two parcours. The small driving wheel will be forced to rise and the appropriately prepared exchange will allow the vehicle, according to the space being examined, to proceed in the same sense or to follow the deviated parcours.

The rising of the small wheel will cause at the same time the insertion of a sliding-block, not shown in the drawings, in the driving proportion chosen and will thus make the manoeuvre univocal and safe.

In case of automatic driving, as shown in figure 2, the exchange will consist of an electric switch controlled as in the above mentioned cases; if the automatic guide will be realized with a differential transformer or with optical systems, appropriate similar devices like those already described will be used.

The device for automatic driving according to figure 1 allows to use the driving shape as a electric connection conductor to land. In alternative, said shape might contain or support the land conductor; in the case shown in the figure, even if tyres are used, the aerial feeding energy conducts are reduced to only one and the means for taking curret consists of one of the tram-like trolleys of the known kind; in such case, the means performing the duty of connecting the vehicle to earth may have shapes and dimensions different from above mentioned small wheel R.

A similar solution will be possible in the cases of driving with a differential transformer as well as with an optical system, i.e. in all those cases in which the tracing consists of a continuous metal element. Said metal element onto which an appropriate movable contact means may slide or roll, may represent the land conductor of the vehicle.

In the case of current tabs consisting in sliding contacts in U-shape pushed onto the aerial conductors like in the actual trolley-buses the inconveniences actually caused by the parcours modifications may be eliminated repeating on each feeding conductor the exchange described for figure 3.

Figure 5 shows a scheme of an example in which C is the conductor, F the movable element and E the electromagnet moving the same.

The electromagnet will be controlled together with the exchange device of the vehicle's driving.

According to the present invention, the automatic driving of the vehicles allows to use two flanked current tabs consisting of plane sliding contacts similar to those actualy in use, but of smaller width.

By placing the aerial conductors at an appropriate reciprocal distance and appropriately limiting the width of the two trolleys, an efficient system may be obtained.

Still for exemplifying purpose, figure 6 shows the device that allows the two trolleys T and T' to pass the crossings of the two conductors C and C' in case of deviation of the vehicles' parcours.

The aerial conductors will have to be appropriately devided in parts electrically insulated one to the other, as shown in the drawing.

The connection of the various parts will be performed by the switch D operated by the exchange radio-control.

In the position shown in the drawing, the connection for the straight driving are realized; in the alternative position D, those for the deviated driving are realized.

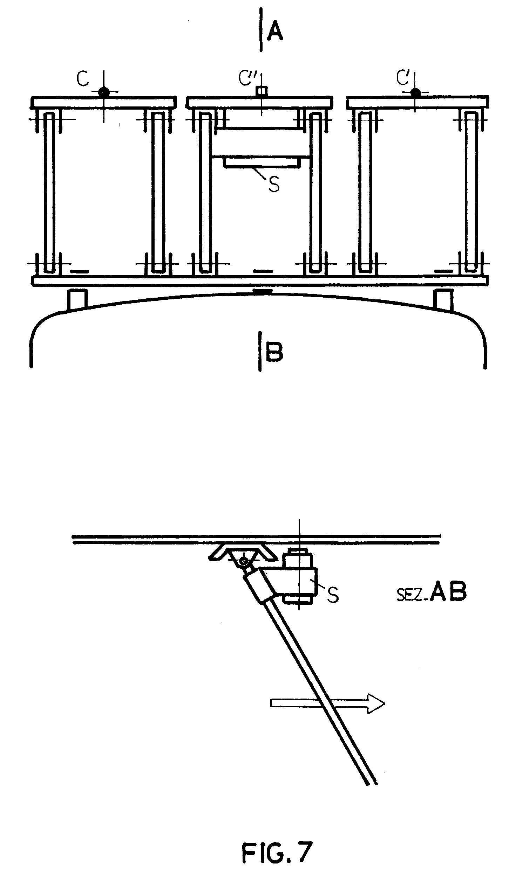

For exemplifying purposes, figure 7 shows the disposition of the two aerial conductors A and B for the feeding of electric energy, while C shows the elment forming the tracing of the automatic driving.

According to the used driving system (optoelectronic, differential transformer or, more in general, a track consisting of electromagnetic waves) the element C'' will assume appropriate shape and dimension. The same for the material used for the realization thereof.

The aerial feeding net consisting of the conductors and of the relative supports may in some cases (streets and squares of particular artistic or archaeological interest) represent an aesthetical not acceptable element; in other cases, difficulties of technical character might show up that are not soluble with ordinary means (like complex crossings of a plurality of aerial nets, problems in installing normal supports, etc.).

In these limited parts of the parcourses the aerial net will be interrupted and the feeding provided by the accumulator batteries provided on the vehicles or in a trolley towed by said vehicle will be exploited. During the run and the stops, in the parcourses served by the aerial net, the batteries will be automatically re-charged.

This system will give the vehicle also the possibility of overcoming short distances in emergency conditions or complex aerial net crossings.

The placing of the batteries on towed trolleys will allow, whenever necessary, to perform the quick exchange by replacing the whole trolley carrying the batteries.

The described features will allow to realize articulated tram-like vehicles provided with a plurality of self-steering wheels of small dimensions. Consequently, also the trampling surface will be correspondently reduced, mainly in the areas that are not interested by the driving-wheels.

The driving-wheels provided on one side of the vehicle may be operated by engines different from the ones of the wheels of the opposite side. The direction taken by the wheels in the curves may automatically determine the speed of the correspondent engines, and thus the adoption of the known mechanisms for preventing the dragging of said wheels on the ground may be avoided.

Safety devices may stop the run of the vehicle if anomalies should arise in the automatic driving system. In emergency situations the run may continue with manual driving and reduced speed.

For what concerns the electronic control and manoevre systems with electromagnetic waves or alternate current impulses, the signal-emitting stations on the earth may be activated and dis-activated by the single vehicles during their run.

The signals will concern the manoeuvres as well as the notices for any kind of request, and could be however integrated by the visual ones like the traffic lights, indicators of the exchanged positions etc.

The specific techniques, favoured by the small reciprocal distances of the emitting and receiving stations, will suggest measures that will assure the safeness and unmistakability of the signals, as well as the impossibility of interferences.

The signals emitted from the vehicle might concern, e.g.:
- the lighting and putting off of transmitting stations on the earh;
- lighting and putting off of signals emitted by the single parts of the small automatic driving cable as described hereinbefore;
- exchange manoevres;
- an eventual restoration of the initial position of the exchanges after the passage of the vehicles.

The signals emitted from land:
- reduce the speed (first advice)
- proceed at reduced speed;
- position assumed by the movable exchange means;
- repetition of the traffic light signals;
- changing the electric feeding from the aerial net to accumulator batteries and vice versa.

If the signals received and repeated on the panel are not considered by the driver, alarm signals are automaticaly activated.

## Claims

1. A vehicle system with automatic driving for the public transport on tyres, with electric traction and aerial net, characterized in:
- a plurality of means for the automatic driving for performing the steering acting onto the wheels and following a predetermined tracking, consisting of a metal shape, of a paint shape or of a system emitting electromagnetic waves and/or consisting of continuous lines or of elements placed at intervals,
- an electric energy feeding line consisting of one single aerial conductor, with the electric connection land conductor consisting of the shape for the automatic driving of the vehicle or inserted in or supported by the same shape;
- a control and manoeuvre system consisting of a whole of stations transmitting electromagnetic waves, placed on board of the vehicles and on land and able to exchange sinals for informations or for controlling manoeuvres.

2. A system according to claim 1, characterized in a device for automatic driving with the transmission of electromagnetic waves, consisting of various separated elements forming, all together, the whole tracing and that are activated and then dis-activated by the single vehicles while performing their run.

3. A system according to claim 1, characterized in a differential transformer mounted on board and in a metal guide fixed in the gangway so that the automatic driving is obtained by amplifying the outlet signal of the transformer, the width and signal whereof are determined by the reciprocal position of the two means.

4. A system according to claim 1, characterized in that the automatic guide is obtained with optical means making use of visible and unvisible light.

5. A system according to claim 1, characerized in the presence of exchange devices consisting of a movable element M that, inserted in the intersection of two alternaive parcours, may assume one of the two positions, or by a electric switch.

6. A system according to claim 1, characerized in an exchange device for the mechanical driving without any movable means.

7. A system according to claim 1, characterized in an electric energy feeding net consising of conducors' couples appropriately distanced, on which different trolleys are kept.

8. A system according to claim 1, characterized in an electric energy aerial feeding net provided with movable devices for allowing the taking means the connection with current and to follow parcours determined by the exchanges of the tracing of the automatic driving device.

9. A system according to claim 1, characterized in an aerial net that comprises, beyond the two conductors for the energy feeding being appropriately distanced, also the element that forms the reference tracing for the automatic driving so that the vehicle may consist of three different trolleys: two having the task of taking the current, and a third one onto which the sensor element is mounted who provides for the automatic driving.

10. A system according to claim 1, characterized in the feeding of electric energy to the vehicles by means of an aerial net as well as by accumulator batteries provided on said vehicles or on towed trolleys, so as to make use, in the distances not covered by aerial nets for the feeding, of the energy fed by the accumulators that may be automatically re-charged during the run or during the stops of the vehicles in those areas in which the aerial net is provided.

11. A system according to claim 1, characterized in driving-wheels provided on one side of the vehicles and operated by engines different from the ones of the wheels of the opposite side, so that the direction of the wheels in the curves may automatically determine the speed of the correspondent engines, thus avoiding the adoption of those mechanisms used for preventing the dragging of said wheels on the ground.
